(19) Europäisches Patentamt
European Patent Office
Office européen des brevets

(11) **EP 2 159 546 A2**

(12) **EUROPÄISCHE PATENTANMELDUNG**

(43) Veröffentlichungstag:
**03.03.2010  Patentblatt 2010/09**

(51) Int Cl.:
***G01D 5/14*** *(2006.01)*     ***G01D 5/244*** *(2006.01)*

(21) Anmeldenummer: **09010140.3**

(22) Anmeldetag: **06.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **30.08.2008   DE 102008045177**

(71) Anmelder: **FESTO AG & Co. KG**
**73734 Esslingen (DE)**

(72) Erfinder:
• **Kiessling, Albert**
  **71263 Weil der Stadt (DE)**
• **Rieder, Wolfgang**
  **73728 Esslingen (DE)**
• **Todorov, Teodor**
  **1326 Sofia (BG)**

(74) Vertreter: **Vetter, Hans**
**Patentanwälte,**
**Magenbauer, Reimold, Vetter & Abel,**
**Plochinger Strasse 109**
**73730 Esslingen (DE)**

(54) **Messverfahren zur berührungslosen Erfassung linearer Relativbewegungen zwischen einer Sensorenanordnung und einem Permanentmagneten**

(57)     Es wird ein Messverfahren zur berührungslosen Erfassung linearer Relativbewegungen zwischen einem zwei- oder dreidimensionalen Hall-Sensor zur Erfassung zweier senkrecht zueinander stehender magnetischer Feldkomponenten (R, A) und einem Permanentmagneten vorgeschlagen. Aus den Ausgangssignalen des Hall-Sensors wird gemäß der Beziehung

$$y = a + b \cdot R / f (c \cdot R^n + d \cdot A^n)$$

eine quasi lineare Positions-Messkurve U = f (y) gebildet, wobei R die Radialfeldkomponente, A die Axialfeldkomponente, U die Messspannung und a, b, c, d und n konstante Faktoren sind.

*Fig. 2*

EP 2 159 546 A2

**Beschreibung**

Die Erfindung betrifft ein Messverfahren zur berührungslosen Erfassung linearer Relativbewegungen zwischen einer Sensoranordnung zur Erfassung zweier senkrecht zueinander stehender magnetischer Feldkomponenten (R, A) und einem Permanentmagneten.

Bei einem derartigen aus der DE 19836599 A1 bekannten Messverfahren werden die beiden senkrecht zueinander stehenden. Feldkomponenten dahingehend als Positionssignal ausgewertet, dass ihr Quotient gebildet wird. Dies führt zu einem Auswertesignal, das von einer angestrebten Linearität stark abweicht, was sich bei einer genauen Positionserfassung als sehr nachteilig erweist. Insbesondere ist auch der Messbereich, der noch einigermaßen linear ist, relativ klein.

Eine Aufgabe der vorliegenden Erfindung besteht darin, ein Messverfahren der eingangs genannten Gattung zu schaffen, das zu einem nahezu linearen beziehungsweise quasi linearen Positions-Messsignal führt, das über einen relativ großen Messbereich linear ist, so dass eine exakte Messwerterfassung über eine im Vergleich zum Stand der Technik wesentlich größere Messstrecke ermöglicht wird.

Diese Aufgabe wird erfindungsgemäß durch ein Messverfahren mit den Merkmalen des Anspruchs 1 gelöst.

In vorteilhafter Weise wird erfindungsgemäß ein zwei- oder dreidimensionaler Hall-Sensor anstelle von Einzelsensoren zur Erfassung unterschiedlicher Feldkomponenten eingesetzt. Die Erfassung von zwei senkrecht zueinander stehenden Feldkomponenten kann dadurch nahezu punktförmig erfolgen. Durch die erfindungsgemäße funktionale Beziehung der Feldkomponenten kann eine punktsymmetrische, quasi lineare Positions-Messkurve mit großem Wegmessbereich erzielt werden. Mit einem einzigen zwei- oder dreidimensionalen Hall-Sensor kann mit großer Genauigkeit ein Wegbereich abhängig von der gegebenen Zylinder-, Magnet- und Sensoranordnung von typischerweise bis zu +/- 25 mm von der Sensormitte aus gemessen erreicht werden. Die quasi Linearität ermöglicht sehr exakte Positionsmessungen, wobei auch eindeutig erfasst werden kann, ob sich der Permanentmagnet links oder rechts der Sensoranordnung befindet. Da viele zwei- oder dreidimensionale Hall-Sensoren mit einem integrierten Mikroprozessor versehen sind, kann die Berechnung gemäß der erfindungsgemäßen Formel bereits im Sensor erfolgen, so dass dieser direkt das lineare Wegmesssignal ausgibt. Selbstverständlich ist auch eine externe Auswertung durch ein analoges oder digitales Rechenwerk oder einen digitalen oder analog arbeitenden ASIC möglich.

Durch die in den Unteransprüchen aufgeführten Maßnahmen sind vorteilhafte Weiterbildungen und Verbesserungen des im Anspruch 1 angegebenen Messverfahrens möglich.

Die quasi lineare Positions-Messkurve wird zweckmäßigerweise durch die Funktion U = y • e + g gebildet, wobei y die erfindungsgemäße funktionale Beziehung der Feldkomponenten und e sowie g vorgebbare Spannungswerte sind. Hierdurch können die Messamplitude und die Signalposition wunschgemäß eingestellt werden.

Zur Erzielung der angestrebten Linearität haben sich quadratische funktionale Abhängigkeiten als besonders günstig erwiesen. Dies führt bevorzugt zur funktionalen Beziehung

$$y = a + b \cdot R / (c \cdot R^2 + d \cdot A^2)$$

Das Ergebnis dieser mathematischen Beziehung ist eine punktsymmetrische quasi lineare Kurve, deren Nulldurchgang dort zu finden ist, wo das radiale Feld seinen Nulldurchgang hat. Dieser Punkt befindet sich, wenn nicht äußere ablenkende ferromagnetische Elemente wie z.B. eine magnetische Kolbenstange vorhanden sind, in der radialen Symmetrieebene des ringförmigen Kolbenmagneten.

Wenn man die angegebene Beziehung so modifiziert, dass die Radialfeldkomponente R als Betrag Abs R gewertet wird und der Faktor b negativ wird, so erzielt man eine Dreieckskurve mit quasi linearen symmetrischen Seitenlinien anstelle der ansonsten vorliegenden Z-Funktion. Dies kann im Hinblick auf Spannungsausfälle von Vorteil sein.

Bei einfacherer Ausprägung der funktionalen Beziehung können die Faktoren c und d zu 1 werden und der Faktor a zu 0.

Bei einer vorteilhaften Anwendung des erfindungsgemäßen Messverfahrens wird der Permanentmagnet oder eine mit dem Permanentmagneten verbundene Einrichtung an der Sensoranordnung vorbeibewegt. Hierbei kann der Permanentmagnet in einer besonders vorteilhaften Anwendung am Kolben einer Zylinder-anordnung angeordnet sein.

In einer vorteilhaften Weiterbildung der Erfindung wird der Faktor b als Skalierungsfaktor mit Hilfe eines Temperatursensors dynamisch zur Kompensation des Temperaturkoeffizienten des Permanentmagneten und/oder einer mit diesem verbundenen Einrichtung angepasst.

Die Sensorausgangswerte können auch in vorteilhafter Weise mittels eines Teach-Vorgangs durch eine ein- oder mehrmalige Relativbewegung zwischen Sensoranordnung und Permanentmagnet normiert werden. Hierzu können beispielsweise definierte Werte des axialen und radialen Feldes festgehalten und in einem Speicher abgelegt werden, wobei nur wenige Parameter erforderlich sind im Gegensatz zu der üblichen Look-up-Tabelle, bei der für jeden einzelnen Wegpunkt Parameter abgelegt werden. Mit Hilfe der so gewonnenen Werte lässt sich sowohl eine Nullpunkt-(Offset-) Korrektur als auch eine Verstärkungskorrektur durchführen, so dass der Sensorausgang sich im Rahmen industrieüblicher Spannungswerte bewegt.

Ausführungsbeispiele der Erfindung sind in der Zeichnung dargestellt und in der nachfolgenden Beschreibung näher erläutert. Es zeigen:

Figur 1    eine schematische Darstellung eines mit einem Permanentmagneten versehenen Kolbens, der sich in einem Zylinder bewegt, an dessen Zylinderwandung ein zwei- oder dreidimensionaler Hall-Sensor angebracht ist,

Figur 2    ein Signaldiagramm zur Erläuterung einer ersten Variation der erfindungsgemäßen Verknüpfungsfunktion und

Figur 3    eine zweite Variation der erfindungsgemäßen Verknüpfungsfunktion.

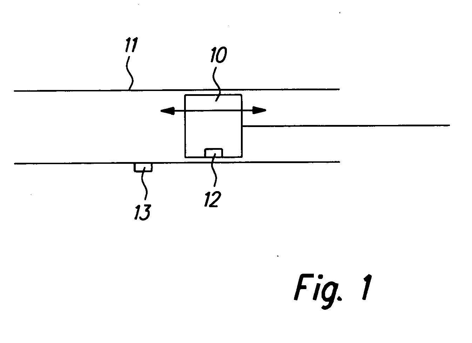

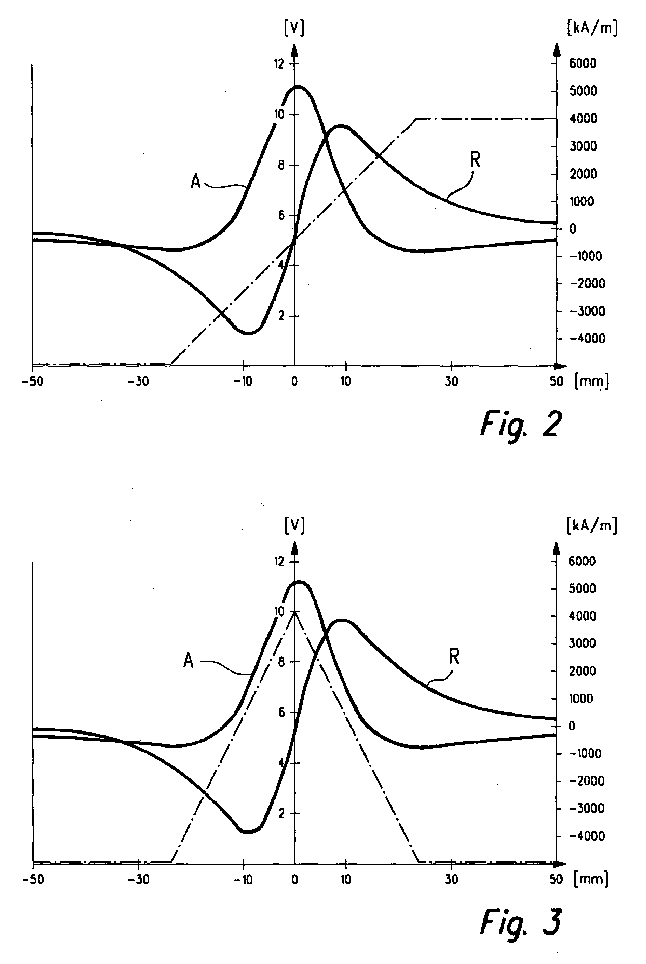

In Figur 1 ist schematisch eine Kolben-Zylinder-Anordnung dargestellt, bei der sich ein Kolben 10 in einem Zylinder 11 linear bewegt. Der Kolben 10 ist mit einem Permanentmagneten 12 versehen, dessen Magnetfeld beim Passieren eines zweidimensional messenden Hall-Sensors 13 an der Zylinderwandung des Zylinders 11 dort Sensorsignale erzeugt, wie sie in Verbindung mit den Figuren 2 und 3 noch näher erläutert werden. Der zweidimensionale Hall-Sensor 13 kann sowohl radiale als auch axiale Komponenten des Magnetfelds des Permanentmagneten 12 erfassen. Die radialen Feldkomponenten werden im Folgenden als R und die axialen Feldkomponenten als A bezeichnet. Zweidimensionale Hall-Sensoren haben gegenüber den induktiven und MR-Sensoren den zusätzlichen Vorteil, dass sie nicht nur den Betrag des Feldvektors erfassen können, sondern auch dessen Vorzeichen. Mit einem zweidimensionalen Hall-Sensor lässt sich deshalb erkennen, ob sich der Permanentmagnet 12 beziehungsweise der Kolben 10 links oder rechts von einem solchen Sensor befindet.

Derartige punktförmig messende zweidimensionale Hall-Sensoren sind beispielsweise unter der Bezeichnung 2 SA-10 der Firma Melexis im Handel erhältlich. Alternativ zu zweidimensionalen Hall-Sensoren können prinzipiell auch dreidimensionale Hall-Sensoren verwendet werden, bei denen dann entweder die dritte Dimension nicht ausgewertet wird oder für zusätzliche Zwecke genutzt wird, wie z.B. Temperaturkompensation, Erkennung des Nutablagewinkels, Offsetkompensation, Gain-Kompensation oder Fremdfelderkennung.

In den Figuren 2 und 3 sind die beiden senkrecht zueinander stehenden Feldkomponenten A und R beim Passieren des Hall-Sensors 13 durch den Permanentmagneten 12 dargestellt. Um die Position des Permanentmagneten 12 beziehungsweise des Kolbens 10 relativ zur Position des Hall-Sensors 13 in quasi linearer, also möglichst linearer Abhängigkeit anzeigen zu können, werden die Hall-Signale der senkrecht zueinander stehenden Feldkomponenten R und A durch die folgende Beziehung miteinander verknüpft:

$$y = a + b \cdot R / f (c \cdot R^n + d \cdot A^n) \qquad [1]$$

Dabei sind a, b, c, d und n konstante Faktoren beziehungsweise Faktoren, die je nach Anwendung und Wunsch optimiert werden können. Die Messspannung U als Funktion der Position wird je nach gewünschtem Messbereich durch die Funktion U = f (y) gebildet, wobei y die sich aus der obigen Beziehung ergebende Variable ist. Beispielsweise kann folgende Messspannung gewählt werden:

$$U = y \cdot e + g \qquad [2]$$

Dabei kann beispielsweise e zu 9 Volt und f zu g Volt gewählt werden.

Die in Figur 2 dargestellte punktsymmetrische lineare Messkurve beginnt bei einer Position von -25 mm linear anzusteigen bis zu einem Pegel von 10 Volt bei einer Position +25 mm. Beim Passieren des Hall-Sensors 13 durch den Permanentmagneten 12 liegt eine Messspannung von 5 Volt vor. Diese Messkurve wird durch die folgende Beziehung erreicht:

$$y = 0,5 + b \cdot R \ / \ (R^2 + A^2) \qquad [3]$$

Diese geht aus der Gleichung [1] dadurch hervor, dass a = 0,5, c = 1, d = 1 und n = 2 wird.

Die in Figur 3 strichpunktiert dargestellte dreieckförmige Messkurve mit zwei spiegelsymmetrischen Dreiecksflanken wird durch die folgende Beziehung erreicht:

$$y = 1 - b \cdot Abs \ (R) \ / \ (R^2 + A^2) \qquad [4]$$

Diese Beziehung geht aus der Gleichung [1] dadurch hervor, dass a = 1, b negativ, n = 2 und für R der Betrag R (Abs R) eingesetzt wird.

Die Gleichung [3] kann auch durch die allgemeinere Gleichung

$$y = a + b \cdot R \ / \ (c \cdot R^2 + d \cdot A^2) \qquad [5]$$

variiert werden. Eine weitere mögliche Beziehung der Feldkomponenten A und R ergibt sich durch die folgende Gleichung:

$$y = a + b \cdot R \ / \ (Abs \ (c \cdot R) - d \cdot A) \qquad [6]$$

Die beschriebenen funktionalen Beziehungen können durch die einfachen Grundrechenarten Addition, Subtraktion, Multiplikation und Division, also ohne Potenz- und Wurzelfunktionen, realisiert werden. Diese Rechenoperationen können sowohl in einem kleinen Mikroprozessor als.auch in einem analogen Rechenwerk oder einem digitalen oder analog arbeitenden ASIC durchgeführt werden. Die entsprechende Hardware kann im Hall-Sensor 13 integriert sein, so dass direkt die lineare Messspannung abgegriffen werden kann, oder aber die Auswertung erfolgt extern. Bei der Berechnung der angegebenen Formeln können auch Näherungslösungen verwendet werden, wie zum Beispiel eine Approximation der Formeln durch eine abgebrochene Reihenentwicklung.

Da an den Rändern des Messbereichs von beispielsweise +/-25 mm das Signal-Rausch-Verhältnis (SNR) sehr schlecht wird, sollte dort eine Unterdrückung beziehungsweise Ausblendung des Messsignals erfolgen. Das Abbruchkriterium, ab dem das SNR zu klein wird, kann über eine fest eingestellte Schwelle oder über eine Messung des tatsächlichen Signalrauschens erfolgen. Alternativ oder zusätzlich zur räumlichen Filterung kann auch eine geeignete zeitliche Filterung der Sensorrohsignale dienen.

Die Normierung der Sensbrausgangswerte kann bevorzugt durch einen Teach-Vorgang erfolgen, der durch die einmalige oder mehrmalige Bewegung des Permanentmagneten 12 nach der Sensormontage ausgelöst wird. Dabei werden definierte Werte des axialen und radialen Feldes festgehalten und in einem nicht dargestellten Speicher abgelegt. Mit Hilfe der gewonnenen Werte lässt sich sowohl eine Nullpunkt-(Offset-)Korrektur als auch eine Verstärkungskorrektur durchführen, so dass die Sensorausgangssignale den industrieüblichen Werten entsprechen, also beispielsweise Werten von +/- 10 Volt oder 0 bis 20 mA. Der Teach-Vorgang erspart jegliche Abgleichvorgänge in der Fertigung und sichert gleichzeitig die Anpassung beispielsweise an unterschiedliche Zylinder- und Kolbenmagnettypen.

Der Faktor b als Skalierungsfaktor kann beispielsweise mit Hilfe eines nicht dargestellten Temperatursensors dynamisch angepasst werden, so dass eine Kompensation des Temperaturkoeffizienten des Permanentmagneten 12 erreicht werden kann. Bei Verwendung von zweidimensionalen oder dreidimensionalen Hall-Sensoren, die intern den Temperaturkoeffizienten des Permanentmagneten kompensieren können, ist die externe Kompensation nicht notwendig, solange die angenommene Drift der mittleren Drift des Permanentmagneten am Kolben 10 des Zylinders 11 entspricht. Ansonsten kann eine zusätzliche externe Kompensation mit Hilfe eines Temperatursensors sinnvoll oder erforderlich sein, oder die interne Driftkompensation wird aus extern vorgebbaren Werten gefüttert.

Zur Erweiterung des Messbereichs können mehrere, im definierten Messabstand positionierte zwei- oder dreidimensionale Hall-Sensoren entlang des Messwegs angeordnet werden.

Obwohl durch den beschriebenen Messvorgang prinzipiell ein zweidimensionaler Hall-Sensor ausreicht, kann in Einzelfällen auch ein dreidimensionaler Hall-Sensor sinnvoll sein. Beispielsweise bei der Anbringung des Hall-Sensors in nichtzentrischen Nuten eines Zylinders 11 ist das radiale Signal abhängig vom Winkelversatz der Nut. Dieser Fehler kann durch einen dreidimensionalen Hall-Sensor und trigonometrische Funktionen eliminiert werden. Dies schließt auch den Sonderfall eines Versatzes um 90° ein.

In den Figuren 2 und 3 bezeichnet die Abszisse die Position des Permanentmagneten 12 relativ zum Hall-Sensor 13 in mm. Die Ordinate bezüglich der strichpunktiert dargestellten Messkurve gibt die Spannung in Volt wieder. Auf der rechten Seite ist jeweils die Ordinate für die Feldstärke der beiden Feldkomponenten A und R in kA/m aufgetragen.

Die Erfindung ist selbstverständlich nicht auf die Anwendung für Kolben-Zylinder-Anordnungen beschränkt, sondern ist überall dort anwendbar, wo eine Relativposition zwischen einem Permanentmagneten 12 und einem zwei- oder dreidimensionalen Hall-Sensor 13 bestimmt und gemessen werden soll.

**Patentansprüche**

1. Messverfahren zur berührungslosen Erfassung linearer Relativbewegungen zwischen einer Sensoranordnung zur Erfassung zweier senkrecht zueinander stehender magnetischer Feldkomponenten (R, A) und einem Permanentmagneten (12), **dadurch gekennzeichnet, dass** aus den Ausgangssignalen eines als Sensoranordnung verwendeten zwei- oder dreidimensionalen Hall-Sensors (13) gemäß der Beziehung

$$y = a + b \cdot R \, / \, f \, (c \cdot R^n + d \cdot A^n) \qquad [1]$$

eine quasi lineare Positions-Messkurve U = f (y) gebildet wird, wobei R die Radialfeldkomponente, A die Axialfeldkomponente, U die Messspannung und a, b, c, d und n konstante Faktoren sind.

2. Messverfahren nach Anspruch 1, **dadurch gekennzeichnet, dass** die quasi lineare Positions-Messkurve durch die Funktion

$$U = y \cdot e + g \qquad [2]$$

gebildet wird, wobei e und g vorgegebene Spannungswerte sind.

3. Messverfahren nach Anspruch 1 oder 2, **dadurch gekennzeichnet, dass** der Faktor n = 2 ist.

4. Messverfahren nach Anspruch 3, **gekennzeichnet durch** die Beziehung

$$y = a + b \cdot R \, / \, (c \cdot R^2 + d \cdot A^2) \qquad [5].$$

5. Messverfahren nach Anspruch 4, **dadurch gekennzeichnet, dass** die Radialfeldkomponente R als Betrag Abs R gewertet wird und der Faktor b negativ ist, wobei der Faktor a insbesondere 1 ist.

6. Messverfahren nach Anspruch 1 oder 2, **gekennzeichnet durch** die Beziehung

$$Y = a + b \cdot R \, / \, (Abs \, (c \cdot R) - d \cdot A) \qquad [6]$$

7. Messverfahren nach einem der vorhergehenden Ansprüche, **dadurch gekennzeichnet, dass** der Faktor c = 1 und der Faktor d = 1 ist.

8. Messverfahren nach einem der vorhergehenden Ansprüche, **dadurch gekennzeichnet, dass** der Faktor a = 0 ist.

9. Messverfahren nach einem der vorhergehenden Ansprüche, **dadurch gekennzeichnet, dass** der Permanentmagnet (12) oder eine mit dem Permanentmagneten (12) verbundene Einrichtung (10) am Hall-Sensor (13) vorbeibewegt wird.

10. Messverfahren nach Anspruch 9, **dadurch gekennzeichnet, dass** der Permanentmagnet (12) an der als Kolben einer Zylinderanordnung ausgebildeten Einrichtung (10) angeordnet ist.

11. Messverfahren nach einem der vorhergehenden Ansprüche, **dadurch gekennzeichnet, dass** der Faktor b als Skalierungsfaktor b (T) mit Hilfe eines Temperatursensors dynamisch zur Kompensation des Temperaturkoeffizienten des Permanentmagneten (12) und/oder einer mit diesem verbundenen Einrichtung (10) angepasst wird.

12. Messverfahren nach einem der vorhergehenden Ansprüche, **dadurch gekennzeichnet, dass** die Sensorausgangswerte mittels eines Teach-Vorgangs durch eine ein- oder mehrmalige Relativbewegung zwischen dem Hall-Sensor (13) und dem Permanentmagneten (12) normiert werden.

13. Messverfahren nach einem der vorhergehenden Ansprüche, **dadurch gekennzeichnet, dass** zur Erweiterung des Messbereichs mehrere Hall-Sensoren (13) beabstandet voneinander entlang des Messwegs angeordnet sind.

*Fig. 1*

*Fig. 2*

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19836599 A1